Europäisches Patentamt

European Patent Office

Office européen des brevets

(19)

(11) Publication number : **0 476 864 A2**

(12) # EUROPEAN PATENT APPLICATION

(21) Application number : 91307906.7

(22) Date of filing : 29.08.91

(51) Int. Cl.[5] : **B29C 47/02,** // B29K21:00

(30) Priority : **30.08.90 JP 229495/90**

(43) Date of publication of application :
**25.03.92 Bulletin 92/13**

(84) Designated Contracting States :
**DE ES GB**

(71) Applicant : **KINUGAWA RUBBER INDUSTRIAL CO., LTD.
330, Naganuma-cho
Chiba-shi Chiba-ken (JP)**

(72) Inventor : **Yoshino, Shigeo, c/o Kinugawa Rubber Ind. Co., Ltd
330, Naganuma-cho
Chiba-shi, Chiba-ken (JP)**

(74) Representative : **Bardo, Julian Eason et al
Abel & Imray Northumberland House 303-306
High Holborn
London, WC1V 7LH (GB)**

(54) Extrusion die.

(57)    An extrusion die for adhering a tape (10) on a rubber article (20) which is extruded is composed of a die base (1) fixed to an outlet port of an extrusion head (2) to form a nozzle (5) for allowing the article (20) to extrude, a tape supply means (3) connected with the die base (1) which is oriented at adjacent a first surface of the article (20) to partially supply the tape (10) toward the first surface for allowing to mate the both so as to form a lamination, and a pressurizing means (4) movably connected with the die base (1) oriented at adjacent a second surface of the article (20) to pressurize the article (20) toward the tape (10) for adhering the both. The pressurizing means (4) is slidably reciprocated with respect to the direction of the article (20) extruded to kept distance from the article (20) when the tape (10) is not supplied thereto.

EP 0 476 864 A2

# FIG.1

The present invention relates generally to a structure of an extrusion die. Specifically, the present invention relates to a structure of an extrusion die for adhering a tape with pressure on a surface of a rubber article which is extruded.

Commonly, an extrusion die having a tape supply means and a pressurizing means facing each other is fixed to an extruder adjacent to an outlet port thereof to adhere the tape on a surface of a rubber article which is extruded from the extruder. The tape is supplied toward the outlet port of the extruder via a guide path installed in the tape supply means, then mated with one of the extruded surface of the article. The article laminated with the tape then pressurized by the pressurizing means to adhere the tape on the surface of the article. Pressure is successively applied to the surface during operation.

However, when forming an article partially adhering the tape thereon, supply of the tape from the tape supply means must be stopped, so the guide path of the supply means is remained empty. Therefore, the rubber article extruded from the extruder tends to be pressed into the guide path due to pressure successively applied by the pressurizing means, and frequently, backflow of a rubber article to the extruder occurs. These cause operative defection of the tape supply means. Additionally, configuration of the obtained article tends to be deteriorated, because the surface thereof cannot be formed smoothly. In order to solve the aforementioned problems, re-arrangement of the die whenever the tape supply stops has been generally made, as is very labor intensive.

It is therefore a principal object of the present invention to provide an extrusion die which can form a rubber article partially adhering a tape without deteriorating the configuration thereof.

It is another object of the present invention to provide an extrusion die which can form a rubber article partially adhering a tape without operative defection of the component.

It is a further object of the present invention to provide an extrusion die of which pressure applied to the article is controllable depending on a tape supply toward a rubber article.

In order to accomplish the aforementioned and other objects, an extrusion die for partially doubling materials is composed of a die base fixed to an outlet port of an extrusion head to form a nozzle for allowing a first material to extrude, means for supplying a second material connected with the die base oriented at adjacent a first surface of the first material to partially supply the second material toward the first material for allowing to mate the both so as to form a lamination, and a pressurizing means movably connected with the die base which is oriented at adjacent a second surface of the first material to pressurize the first material toward the second material for adhering the both.

The pressurizing means is moved to kept distance from the first material when the second material is not supplied thereto.

The means for supplying the second material may be movably connected with the die base to keep distance from the first material when the second material is not supplied thereto.

Alternatively, an extrusion die for adhering a tape on a rubber article which is extruded composed of a die base fixed to an outlet port of an extrusion head to form a nozzle for allowing the article to extrude, a tape supply means connected with the die base which is oriented at adjacent a first surface of the article to partially supply the tape toward the first surface for allowing to mate the both so as to form a lamination, and a pressurizing means movably connected with the die base oriented at adjacent a second surface of the article to pressurize the article toward the tape for adhering the both being held between the pressurizing means and the tape supply means.

The pressurizing means may be slidably reciprocated with respect to a direction of the article extruded.

Additionally, the pressurizing means may be moved by an actuator, such as a screw fixed to the pressurizing means allowing the means to distance from the article.

Alternatively, the tape supply means may also be slidably reciprocated with respect to a direction of the article extruded.

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:

Fig. 1 is a sectional view of an extrusion die installed to an outlet port of an extruder according to the present invention;

Fig. 2 is an enlarged perspective view of a tape supply means of the extrusion die of Fig. 1;

Fig. 3 is an enlarged perspective view of a pressurizing means of the extrusion die of Fig. 1;

Fig. 4 is a second embodiment of an extrusion die according to the present invention.

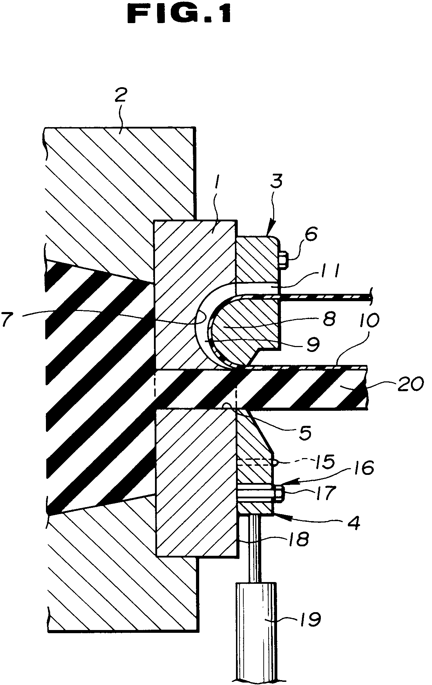

Referring now to the drawings, particularly to Fig. 1, showing a sectional view of an extrusion die according to the present invention, a die base 1 is fixed to an end of an extrusion head 2. A tape supply means 3 and a pressurizing means 4 are installed to the surface of the base 1 oppositely from that fixed to the extrusion head 2, being faced each other adjacent an extrusion nozzle 5.

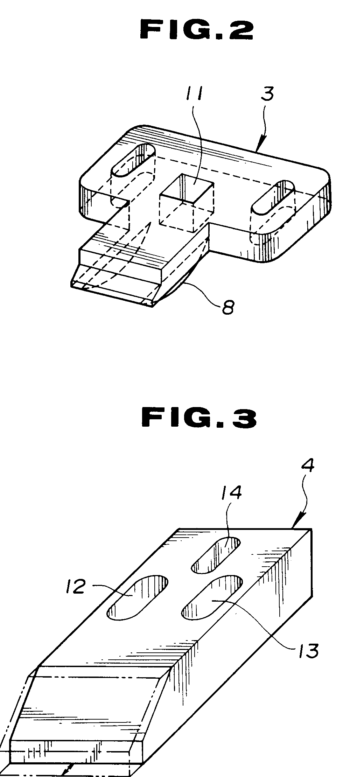

The tape supply means 3 is secured to the facing surface of the die base 1 by a securing means 6, such as bolt. A groove 7 is formed on the facing surface of the base **1**, and a tape guide **8** is projected from the facing surface of the tape supply means **3** along the line of the groove **7** to form a guide path **9** therebetween. Detail configuration of the tape supply means **3** is shown in **Fig. 2**. A tape **10** formed of polyethylene tetrafluoride or such is inserted from an inlet port **11** of the guide path **9**, guided to the area adjacent the extrude nozzle **5** along the line of the guide path **9**. An adhesive is preliminary applied on the surface of the tape **10** where to be adhered.

Referring now to **Fig. 3**, the pressurizing means **4** includes three holes **12**, **13** and **14** having a shape of an elliptical orbit of which major axis is extended in a lengthwise direction of the pressurizing means **4**. The holes **12** and **13** are oriented oppositely in a width direction of the pressurizing means **4** to movably engage a guide pin **15** secured to the facing surface of the base **1** toward the pressurizing means **4**. The hole **14** is oriented at a position to be penetrated by a securing means **16**, such as bolt, installed on the facing surface of the base **1**. A head **17** of the securing means **16** is spaced from the surface of the pressurizing means **4** to form a minimal distance therebetween. Therefore, the pressurizing means **4** are slidably connected to the die base **1** via the securing means **16** in a lengthwise direction of the pressurizing means **4** along the facing surface **18** of the die base **1** according to guidance of the guide pin **15**. The pressurizing means **4** is slided by an actuator **19** mounted on an end of the pressurizing means **4** opposite to the end faced with the nozzle **5**. Operation of the actuator **19** is controlled by a switch (not shown in figures), for example, then the pressurizing means **4** is moved by the actuator **19** toward a direction being kept distance from the nozzle **5** when the tape **10** does not supplied.

During operation, when the tape **10** is adhered to the article **20**, the pressurizing means **4** is positioned adjacent the extrusion nozzle **5** to face with the article **20** extruded therefrom. Concurrently, the tape **10** is supplied via the guide path **9** to the surface of the article **20**, which is opposite to that where pressurizing means **4** is facing. Then, the article **20** laminated with the tape **10** is pressurized by the pressurizing means **4**. Thus, the tape **10** is surely adhered to the surface of the article **20**. On the other hand, when the tape **10** is not adhered to the article **20**, the actuator **19** is driven by the switch (not shown in figures) to move the pressurizing means **4** from the nozzle **5** along the surface of the die base **1**. Then the article **20** is no longer pressurized by the pressurizing means **4**. Thus, pressure applied to the article **20** can be controlled depending on the situation of the tape supply.

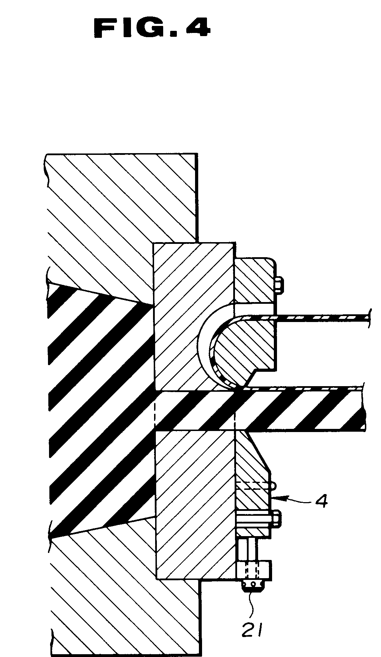

Alternatively, in place of the actuator **19**, any controllable drive means of the pressurizing means **4**, such as a control screw **21** as shown in **Fig. 4**, is preferable to use. Sliding the tape supply means **3** simultaneously with the pressurizing means **4** is also effective for controlling pressure on the article **20**.

According to the present invention, the pressure applied to the article can be controlled depending on the demand of adhesion of the tape, because the pressurizing means are slidably installed to the die base in perpendicular direction against the extending direction of the extruded article. Therefore, when the tape is not supplied to the surface of the article, the article is not pressurized, so partial flow of the article into the guide path of the tape supply means can be prevented. Thus, operative defection of the tape supply means and deterioration of the configuration of the article can be effectively prevented. Because control of the pressure can be accomplished intentionally, productive efficiency can be highly increased compared to conventional re-arrangement of the die whenever the tape demand is changed.

While the present invention has been disclosed in terms of the preferred embodiment in order to facilitate better understanding of the invention, it should be appreciated that the invention can be embodied in various ways without depending from the principle of the invention. Therefore, the invention should be understood to include all possible embodiments and modification to the shown embodiments which can be embodied without departing from the principle of the inventions as set forth in the appended claims.

## Claims

1. An extrusion die for partially doubling materials comprising:

   a die base fixed to an outlet port of an extrusion head to form a nozzle for allowing a first material to extrude,

   means for supplying a second material connected with said die base oriented at adjacent a first surface of said first material to partially supply said second material toward the first material for allowing to mate the both so as to form a lamination, and

   a pressurizing means movably connected with said die base which is oriented at adjacent a second surface of said first material to pressurize the first material toward said second material for adhering the both,

   said pressurizing means being moved to kept distance from said first material when said second material is not supplied thereto.

2. An extrusion die as set forth in claim 1, wherein said means for supplying said second material is movably connected with said die base to keep distance from said first material when the second material is not supplied thereto.

3. An extrusion die for adhering a tape on a rubber article which is extruded comprising:

a die base fixed to an outlet port of an extrusion head to form a nozzle for allowing said article to extrude,

a tape supply means connected with said die base which is oriented at adjacent a first surface of said article to partially supply said tape toward said first surface for allowing to mate the both so as to form a lamination, and

a pressurizing means movably connected with said die base oriented at adjacent a second surface of said article to pressurize the article toward said tape for adhering the both being held between said pressurizing means and said tape supply means,

said pressurizing means being moved to kept distance from said article when said tape is not supplied thereto.

4. An extrusion die as set forth in claim 3, wherein said pressurizing means is slidably reciprocated with respect to a direction of the article extruded.

5. An extrusion die as set forth in claim 3, wherein said pressurizing means is moved by an actuator fixed to said pressurizing means allowing the means to distance from the article.

6. An extrusion die as set forth in claim 3, wherein said pressurizing means is moved by a screw fixed to said pressurizing means allowing the means to distance from the article.

7. An extrusion die as set forth in claim 3, wherein said tape supply means is movably connected with said die base to keep distance from said article when the tape is not supplied thereto.

8. An extrusion die as set forth in claim 7, wherein said tape supply means is slidably reciprocated with respect to a direction of said article extruded.

9. An extrusion die for doubling materials comprising:

a die base fixed to an outlet port of an extrusion head to form a nozzle for allowing a first material to extrude,

a first means movably connected to said die base to partially supply said second material toward said first material for allowing to mate the both so as to form a lamination, and

a second means movably connected to said die base to partially pressurize said first material toward said second material,

said partially pressurizing of the first material by said second means being cooperated with said partially supply of the second material by said first means with respect to a demand of doubling the both.

10. An extrusion die for adhering lengths of tape material to extruded material comprising:

a die base attached to an outlet of an extrusion head and forming an extrusion nozzle,

tape supplying means fixed to the die base adjacent to the extrusion nozzle for feeding tape into contact with a first surface of the extruded material to form a laminate, and

means for pressing the extruded material towards the tape, the pressure means being movably mounted on the die base and withdrawable from a first position for pressing the extruded material towards the tape to a second position for use when tape is not being supplied.

11. A method of adhering lengths of tape material to a material extruded from an extrusion die comprising:

extruding material from an extrusion nozzle, and

advancing a tape intermittently in mating contact with a first surface of the extruded material as it is extruded from the nozzle to form a laminate,

the extruded material being pressed against the tape by pressure applying means provided by a member contacting a second surface of the extruded material opposite the first surface, and moving the pressure applying means away from the extruded material when there is not tape advancing.

# FIG.1

# FIG.2

# FIG.3

# FIG. 4

4

21